# EUROPÄISCHE PATENTSCHRIFT

(11) **EP 2 068 625 B1**
(45) Veröffentlichungstag und Bekanntmachung des Hinweises auf die Patenterteilung: **18.05.2011**
(21) Anmeldenummer: 07802072.4
(22) Anmeldetag: 01.09.2007
(51) Int. Cl.: A01N 25/24, A01N 25/30, A01N 47/40, A01N 51/00

(54) **SUSPENSIONSKONZENTRATE AUF ÖLBASIS**
OIL-BASED SUSPENSION CONCENTRATES
CONCENTRÉ EN SUSPENSION À BASE D'HUILE

(30) Priorität: 15.09.2006 DE 102006043444
(43) Veröffentlichungstag der Anmeldung: 17.06.2009
(73) Patentinhaber: Bayer CropScience AG, 40789 Monheim (DE)
(72) Erfinder: VERMEER, Ronald, 51371 Leverkusen (DE); BAUR, Peter, 86938 Schondorf (DE); DÜLLBERG, Tobias, 51377 Leverkusen (DE)
(86) Internationale Anmeldenummer: PCT/EP2007/007655
(87) Internationale Veröffentlichungsnummer: WO 2008/031512

(56) Entgegenhaltungen:
- WO-A-03/006135
- US-A- 5 425 955
- US-A- 6 071 857
- US-A1- 2002 198 108

## Beschreibung

Die vorliegende Erfindung betrifft neue flüssige agrochemische Zusammensetzungen mit verbesserter Regenfestigkeit, ein Verfahren zur Herstellung dieser Zusammensetzungen und deren Verwendung zur Applikation der enthaltenen Wirkstoffe.

Systemische agrochemische Wirkstoffen, insbesondere systemische Insektizide und / oder Fungizide, brauchen zur Entfaltung der biologischen Wirkung eine Formulierung, welche es ermöglicht, dass die Wirkstoffe in die Pflanze / den Zielorganismen aufgenommen werden. Üblicherweise werden deshalb systemische agrochemische Wirkstoffen als Emulsionskonzentrat (EC), Soluble Liquid (SL) und / oder ölbasierendes Suspensionskonzentrat (OD) formuliert. In einer EC- und SL-Formulierung liegt der Wirkstoff in gelöster Form vor, bei einer OD-Formulierung als Feststoff. Weil für viele agrochemische Wirkstoffen aus technischen / physikalischen Gründen EC- und SL-Formulierungen nicht möglich sind, ist eine OD-Formulierung oft die einzige akzeptable Möglichkeit. Bei einer OD-Formulierung wird die biologische Wirkung durch Zugabe von Penetrationsförderern ermöglicht. Neben diesen Penetrationsförderern werden üblicherweise noch weitere Adjuvantien, welche die Eigenschaften (Retention, Spreitverhalten, Regenfestigkeit, usw.) verbessern, in die Formulierung eingebaut. Ein Adjuvans in diesem Kontext ist eine Komponente, die die biologische Wirkung der Formulierung verbessert, ohne dass die Komponente selbst eine biologische Wirkung zeigt. Adjuvantien im Allgemeinen und Penetrationsförderer insbesondere sind Tenside, welche aus verschiedenen chemischen Klassen kommen können (z.B. Alkanolethoxylate, Aminoethoxylate, Ester von Pflanzenölen (z.B. MSO)).

Nachteil dieser Formulierstrategie ist es, dass hohe Konzentrationen dieser Adjuvantien Pflanzenschäden verursachen können.

Außerdem ist das Verhältnis von Wirkstoff und Adjuvans in einem Produkt von Interesse. Während die ausgebrachte Produktmenge pro Hektar bestimmt wird durch die benötigte Aufwandmenge an Wirkstoff, ist die unterstützende Wirkung des Adjuvans jedoch von der Konzentration des Adjuvans in der Spritzbrühe abhängig. Die Folge ist, dass es eine Beschränkung der machbaren Menge Adjuvans in In-can-Produkt gibt.

Selbstverständlich ist es auch möglich, Adjuvantien als Tank-Mix anzuwenden, d.h. sie in die durch Verdünnung aus einer konzentrierten Formulierung hergestellte Spritzbrühe zu geben. Jedoch ist hier das Risiko für durch Adjuvantien verursachte Pflanzenschäden hoch, insbesondere weil Überdosierungsfehler der Anwender nicht ausgeschlossen werden können. Im Allgemeinen werden Adjuvantien im Tank-Mix-Verfahren auch in höheren Konzentrationen eingesetzt als in einer konzentrierten Formulierung, die bereits Adjuvans enthält (In-Can Formulierung). Weiterhin verbessert eine In-can Formulierung die Sicherheit der Verbraucher bei der Anwendung von agrochemischen Produkten. Zusätzlich wird die unnötige Verwendung von Verpackungsmaterial für Tank-Mix Produkte vermieden. Aus diesen Gründen sind In-can Formulierungen grundsätzlich vorteilhaft.

Es sind bereits zahlreiche wasserfreie Suspensionskonzentrate von agrochemischen Wirkstoffen bekannt geworden. So werden in der WO 03/000053 Formulierungen dieses Typs beschrieben, welche bis zu maximal 55 % verschiedener Adjuvantien enthalten können. Weiterhin sind aus der WO 05/084435 Formulierungen bekannt, welche geschlossene Alkanolethoxylate als Adjuvans in vergleichbaren Konzentration enthalten können.

Durch die hohe Konzentration an Adjuvans zeigen diese Formulierungen schon eine gute Regenfestigkeit. Jedoch ist die Regenfestigkeit solcher Formulierungen nicht immer ausreichend. Im Gegensatz zu Gewächshauskulturen ist für Feldkulturen wie z.B. Getreide oder Baumwolle das Vorkommen von Regen sehr schlecht vorhersagbar. Deshalb ist es wünschenswert, die Regenfestigkeit von flüssigen agrochemischen Zusammensetzungen noch weiter zu optimieren. Es ist für den Anwender vorteilhaft, wenn die Formulierung dafür sorgt, dass der ausgebrachte Wirkstoff nur möglichst kurz empfindlich gegenüber Beregnung ist. Ansonsten könnten eventuell zusätzliche Spritzungen notwendig werden.

Die Verwendung von hydriertem Castoröl in flüssigen agrochemischen Formulierungen ist bisher nicht beschrieben. In US 6,274,570, US 6,071,857, WO 98/00008 und WO 98/00009 wird es in gelförmigen pestiziden Zusammensetzungen als Geliermittel eingesetzt. Weit verbreitet ist der Einsatz in kosmetischen und medizinischen Formulierungen.

Der vorliegenden Erfindung liegt die Aufgabe zugrunde stabile, lagerbare, flüssige agrochemische Zusammensetzungen zu entwickeln, welche im Vergleich zu dem Stand der Technik eine bessere Regenfestigkeit zeigen, ohne dass die Konzentration der oberflächenaktiven Adjuvantien im Produkt erhöht wird.

Die erfindungsgemäßen Zusammensetzungen sind flüssige Suspensionskonzentrate auf Ölbasis, enthaltend
- mindestens einen bei Raumtemperatur festen agrochemische Wirkstoff,
- hydriertes Castoröl,
- mindestens einen Penetrationsförderer,
- mindestens ein Pflanzenöl und/oder Mineralöl,
- mindestens ein nicht-ionisches und/oder mindestens ein anionisches Dispergierhilfsmittel und
- gegebenenfalls einen oder mehrere Zusatzstoffen aus den Gruppen der Emulgiermittel, der schaumhemmenden Mittel, der Konservierungsmittel, der Antioxidantien, der Spreitmittel, der Farbstoffe und/oder der Verdicker.

Gegenstand der vorliegenden Erfindung ist weiterhin die Verwendung von hydriertem Castoröl zur Verbesserung der Regenfestigkeit von flüssigen agrochemischen Zusammensetzungen durch Zugabe von hydriertem Castoröl in eine konzentrierte oder verdünnte agrochemische Zusammensetzung.

Es wurde außerdem gefunden, dass sich die erfindungsgemäßen Zusammensetzungen herstellen lassen, indem man die Komponenten miteinander mischt und gegebenenfalls die entstandene Suspension mahlt. Gegenstand der Erfindung ist deshalb weiterhin ein Verfahren zur Herstellung der erfindungsgemäßen Zusammensetzungen, umfassend das Mischen
- mindestens eines bei Raumtemperatur festen agrochemische Wirkstoffs,
- hydrierten Castoröls,
- mindestens eines Penetrationsförderers,
- mindestens eines Pflanzenöls und/oder Mineralöls,
- mindestens eines nicht-ionischen und/oder mindestens eines anionischen Dispergierhilfsmittels und
- gegebenenfalls eines oder mehrerer Zusatzstoffe aus den Gruppen der Emulgiermittel, der schaumhemmenden Mittel, der Konservierungsmittel, der Antioxydantien, der Spreitmittel, der Farbstoffe und/oder der Verdicker

und bei Bedarf das Mahlen der entstehenden Suspension.

Schließlich wurde gefunden, dass sich die erfindungsgemäßen Zusammensetzungen sehr gut zur Applikation der enthaltenen agrochemischen Wirkstoffe auf Pflanzen und/oder deren Lebensraum eignen.

Es ist als äußerst überraschend zu bezeichnen, dass die erfindungsgemäßen Suspensionskonzentrate auf Ölbasis eine signifikant bessere Regenfestigkeit zeigen als der nächste Stand der Technik, ohne dass die Konzentration an Penetrationsförderer erhöht wird.

Der Gehalt an den einzelnen Komponenten kann in den erfindungsgemäßen Zusammensetzungen innerhalb eines größeren Bereiches variiert werden. So liegen die Konzentrationen
- an bei Raumtemperatur festen agrochemischen Wirkstoffen im Allgemeinen zwischen 1 und 40 Gew.-%, vorzugsweise zwischen 5 und 35 Gew.-%, ganz besonders bevorzugt zwischen 7,5 und 25 Gew.-%,
- an hydriertem Castoröl im Allgemeinen zwischen 0,5 und 3 Gew.%, vorzugsweise zwischen 1 und 2,5 Gew.%,
- an Penetrationsförderern im Allgemeinen zwischen 5 und 45 Gew.%, vorzugsweise zwischen 10 und 35 Gew.-%,
- an Pflanzenöl und/oder Mineralöl im Allgemeinen zwischen 15 und 75 Gew.-%, vorzugsweise zwischen 20 und 50 Gew.%,
- an nicht-ionischen und/oder anionischen Dispergierhilfsmitteln im Allgemeinen zwischen 2,5 und 30 Gew.%, vorzugsweise zwischen 5,0 und 25 Gew.-% und
- an Zusatzstoffen im Allgemeinen zwischen 0,5 und 25 Gew.%, vorzugsweise zwischen 0,5 und 20 Gew.-%.

Für die erfindungsgemäßen Zusammensetzungen eignen sich prinzipiell alle bei Raumtemperatur festen agrochemischen Wirkstoffe. Bevorzugt sind bei Raumtemperatur feste systemische Insektizide, besonders bevorzugte Insektizide sind bei Raumtemperatur feste Insektizide aus den Klassen der Neonikotinoide und Ketoenole, ganz besonders bevorzugt sind Imidacloprid, Thiacloprid und Spirotetramat.

Ebenfalls bevorzugt sind bei Raumtemperatur feste Fungizide. Besonders bevorzugte Fungizide sind bei Raumtemperatur feste Fungizide aus den Klassen der Strobilurine und der Azole. Ganz besonders bevorzugt sind Trifloxystrobin und Tebuconazole.

Als Penetrationsförderer kommen im vorliegenden Zusammenhang alle diejenigen Substanzen in Betracht, die üblicherweise eingesetzt werden, um das Eindringen von agrochemischen Wirkstoffen in Pflanzen zu verbessern. Penetrationsförderer werden in diesem Zusammenhang dadurch definiert, dass sie aus der wässerigen Spritzbrühe und/oder aus dem Spritzbelag in die Kutikula der Pflanze eindringen und dadurch die Stoffbeweglichkeit (Mobilität) von Wirkstoffen in der Kutikula erhöhen können. Die nachher und in der Literatur (Baur et al., 1997, Pesticide Science 51, 131-152) beschriebene Methode kann zur Bestimmung dieser Eigenschaft eingesetzt werden.

Bevorzugte Penetrationsförderer sind Alkanol-alkoxylate der Formel
R-O-(-AO)ₘR' (I)

in welcher
- R: für geradkettiges oder verzweigtes Alkyl mit 4 bis 20 Kohlenstoffatomen steht,
- R': für H, Methyl, Ethyl, n-Propyl, i-Propyl, n-Butyl, i-Butyl, t-Butyl, n-Pentyl oder n-Hexyl steht,
- AO: für einen Ethylenoxid-Rest, einen Propylenoxid-Rest, einen Butylenoxid-Rest oder für Gemische aus Ethylenoxid- und Propylenoxid-Resten oder Butylenoxid-Resten steht und
- m: für Zahlen von 2 bis 30 steht.

Eine besonders bevorzugte Gruppe von Penetrationsförderern sind Alkanulatkoxylate der Formel R-O-(-EO-)ₙ-R' (I-a)

in welcher
- R: die oben angegebene Bedeutung hat,
- R': die oben angegebene Bedeutung hat,
- EO: für -CH₂-CH₂-O- steht und
- n: für Zahlen von 2 bis 20 steht.

Eine weitere besonders bevorzugte Gruppe von Penetrationsförderern sind Alkanol-alkoxylate der Formel

R-O-(-EO-)ₚ-(-PO-)_{q}-R' (I-b) in welcher
- EO, R und R': die oben angegebenen Bedeutungen haben,

- PO: für 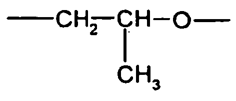
steht,
- p: für Zahlen von 1 bis 10 steht und
- q: für Zahlen von 1 bis 10 steht.

Eine weitere besonders bevorzugte Gruppe von Penetrationsförderern sind Alkanol-Alkoxylate der Formel

R-O-(-PO-)ᵣ-(EO-)ₛ-R' (I-c)

in welcher
- EO, PO, R und R': die oben angegebenen Bedeutungen haben,
- r: für Zahlen von 1 bis 10 steht und
- s: für Zahlen von 1 bis 10 steht.

Eine weitere besonders bevorzugte Gruppe von Penetrationsförderern sind Alkanol-alkoxylate der Formel

R-O-(-EO-)ₚ-(-BO-)_{q}-R' (I-d)

in welcher
- EO, R und R': die oben angegebenen Bedeutungen haben,

- BO: für 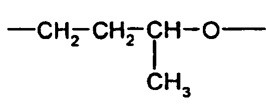
steht,
- p: für Zahlen von 1 bis 10 steht und
- q: für Zahlen von 1 bis 10 steht.

Eine weitere besonders bevorzugte Gruppe von Penetrationsförderern sind Alkanol-alkoxylate der Formel

R-O-(-BO-)ᵣ-(-EO-)ₛ-R' (I-e)

in welcher
- EO, BO, R und R': die oben angegebenen Bedeutungen haben,
- r: für Zahlen von 1 bis 10 steht und
- s: für Zahlen von 1 bis 10 steht.

Eine weitere besonders bevorzugte Gruppe von Penetrationsförderern sind Alkanol-Alkoxylate der Formel

CH₃-(CH₂)ₜ-CH₂-O-(-CH₂-CH₂-O-)ᵤ-R' (I-f)

in welcher
- R': die oben angegebene Bedeutung hat,
- t: für Zahlen von 8 bis 13 steht,
- u: für Zahlen von 6 bis 17 steht.

In den zuvor angegebenen Formeln steht R vorzugsweise für Butyl, i-Butyl, n-Pentyl, i-Pentyl, Neopentyl, n-Hexyl, i-Hexyl, n-Octyl, i-Octyl, 2-Ethyl-hexyl, Nonyl, i-Nonyl, Decyl, n-Dodecyl, i-Dodecyl, Lauryl, Myristyl, i-Tridecyl, Trimethyl-nonyl, Palmityl, Stearyl oder Eicosyl.

Als Beispiel für besonders bevorzugte Alkanol-Alkoxylate der Formel (I-a) seien ethoxylierte Guerbetalkohole der Formel (I-a-1) genannt:

R-O-(-EO-)_{b}-R' (I-a-1)

in welcher
- R: für C₁₆-C₁₈-Alkyl steht,
- R': für n-Butyl, i-Butyl oder t-Butyl steht,
- EO: die oben angegebene Bedeutung hat und
- b: für Zahlen von 4 bis 10 steht.

Als Beispiel für ein Alkanol-Alkoxylat der Formel (I-c) sei 2-Ethyl-hexyl-alkoxylat der Formel 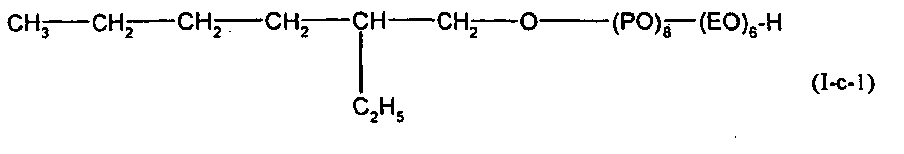 in welcher EO und PO die oben angegebenen Bedeutungen haben und die Zahlen 8 und 6 Durchschnittswerte darstellen, genannt.

Als Beispiel für ein Alkanol-Alkoxylat der Formel (I-d) sei die Verbindung der Formel

CH₃-(CH₂)₁₀-O-(-EO-)₆-(-BO-)₂-CH₃ (I-d-1)

in welcher EO und BO die oben angegebenen Bedeutungen haben und die Zahlen 10, 6 und 2 Durchschnittswerte darstellen, genannt.

Besonders bevorzugte Alkanol-Alkoxylate der Formel (I-f) sind Verbindungen dieser Formel, in denen
- t: für Zahlen von 9 bis 12 und
- u: für Zahlen von 7 bis 9
steht.

Ganz besonders bevorzugt genannt sei das Alkanol-Alkoxylat der Formel (I-f-1)

CH₃-(CH₂)ₜ-CH₂-O-(-CH₂-CH₂-O-)ᵤ-H (I-f-1)

in welcher
- t: für den Durchschnittswert 10,5 steht und
- u: für den Durchschnittswert 8,4 steht.

Die Alkanol-Alkoxylate sind durch die obigen Formeln allgemein definiert. Bei diesen Substanzen handelt es sich um Gemische von Stoffen des angegebenen Typs mit unterschiedlichen Kettenlängen. Für die Indices errechnen sich deshalb Durchschnittswerte, die auch von ganzen Zahlen abweichen können.

Die Alkanol-Alkoxylate der angegebenen Formeln sind bekannt oder lassen sich nach bekannten Methoden herstellen (vgl. WO 98-35 553, WO 00-35 278 und EP-A 0 681 865).

Als Pflanzenöle kommen alle üblicherweise in agrochemischen Mitteln einsetzbaren, aus Pflanzen gewinnbaren Öle in Frage. Beispielhaft genannt seien Sonnenblumenöl, Rapsöl, Olivenöl, Rizinusöl, Rüböl, Maiskernöl, Baumwollsaatöl und Sojabohnenöl. Als Mineralöl kommen alle üblicherweise in agrochemischen Mitteln einsetzbaren, aus Erdöl gewinnbaren Öle in Frage. Beispielhaft genannt seien Weißöl, Paraffinöl und kurzkettige aliphatische Öle wie z.B. Öle aus der Exxsol® D Serie.

Die erfindungsgemäßen Suspensionskonzentrate auf Ölbasis enthalten mindestens ein nicht-ionisches Dispergierhilfsmittel und/oder mindestens ein anionisches Dispergierhilfsmittel.

Als nicht-ionische Dispergierhilfsmittel kommen alle üblicherweise in agrochemischen Mitteln einsetzbaren Stoffe dieses Typs in Betracht. Vorzugsweise genannt seien Polyethylenoxidpolypropylenoxid-Blockcopolymere, Polyethylenglykolether von linearen Alkoholen, Umsetzungsprodukte von Fettsäuren mit Ethylenoxid und/oder Propylenoxid, ferner Polyvinylalkohol, Polyvinylpyrrolidon, Mischpolymerisate aus Polyvinylalkohol und Polyvinylpyrrolidon sowie Copolymerisate aus (Meth)acrylsäure und (Meth)acrylsäureestern, weiterhin Alkylethoxylate und Alkylarylethoxylate, die gegebenenfalls phosphatiert und gegebenenfalls mit Basen neutralisiert sein können, wobei Sorbitolethoxylate beispielhaft genannt seien, sowie Polyoxyalkylenamin-Derivate.

Als anionische Dispergierhilfsmittel kommen alle üblicherweise in agrochemischen Mitteln einsetzbaren Substanzen dieses Typs in Frage. Bevorzugt sind Alkalimetall- und Erdalkalimetall-Salze von Alkylsulfonsäuren oder Alkylarylsulfonsäuren.

Eine weitere bevorzugte Gruppe von anionischen Dispergierhilfsmitteln sind in Pflanzenöl wenig lösliche Salze von Polystyrolsulfonsäuren, Salze von Polyvinylsulfonsäuren, Salze von Naphthalinsulfonsäure-Formaldehyd-Kondensationsprodukten, Salze von Kondensationsprodukten aus Naphthalinsulfonsäure, Phenolsulfonsäure und Formaldehyd sowie Salze von Ligninsulfonsäure.

Als Zusatzstoffe, die in den erfindungsgemäßen Zusammensetzungen enthalten sein können, kommen Emulgatoren, schaumhemmende Mittel, Konservierungsmittel, . Antioxidantien, Spreitmittel, Farbstoffe und Verdickungsmittel in Betracht.

Bevorzugte Emulgatoren sind ethoxylierte Nonylphenole, Umsetzungsprodukte von Alkylphenolen mit Ethylenoxid und/oder Propylenoxid, ethoxylierte Arylalkylphenole, weiterhin ethoxylierte und propoxylierte Arylalkylphenole, sowie sulfatierte oder phosphatierte Arylalkylethoxylate bzw. -ethoxy-propoxylate, wobei Sorbitan-Derivate, wie Polyethylenoxid-Sorbitan-Fettsäureester und Sorbitan-Fettsäureester, beispielhaft genannt seien.

Als schaumhemmende Stoffe kommen alle üblicherweise für diesen Zweck in agrochemischen Mitteln einsetzbaren Substanzen in Betracht. Bevorzugt sind Silikonöle und Magnesiumstearat.

Als Konservierungsmittel kommen alle üblicherweise für diesen Zweck in agrochemischen Mitteln dieses Typs einsetzbaren Substanzen in Frage. Als Beispiele genannt seien Preventol® (Fa. Bayer AG) und Proxel®.

Als Antioxidantien kommen alle üblicherweise für diesen Zweck in agrochemischen Mitteln einsetzbaren Substanzen in Betracht. Bevorzugt sind Butylhydroxytoluol und/oder Zitronensäure.

Als Spreitmittel kommen alle üblicherweise für diesen Zweck in agro-chemischen Mitteln einsetzbaren Substanzen in Betracht. Bevorzugt sind Alkylsiloxane.

Als Farbstoffe kommen alle üblicherweise für diesen Zweck in agrochemischen Mitteln einsetzbaren Substanzen in Frage. Beispielhaft genannt seien Titandioxid, Farbruß, Zinkoxid und Blaupigmente sowie Permanentrot FGR.

Als Verdickungsmittel kommen alle üblicherweise für diesen Zweck in agrochemischen Mitteln einsetzbaren Substanzen in Betracht, die als Verdickungsmittel fungieren. Bevorzugt sind anorganische Partikel, wie Carbonate, Silikate und Oxide, sowie auch organische Substanzen, wie Hamstoff-Formaldehyd-Kondensate. Beispielhaft erwähnt seien Kaolin, Rutil, Siliciumdioxid, sogenannte hochdisperse Kieselsäure, Kieselgele, sowie natürliche und synthetische Silikate, außerdem Talkum.

Die Herstellung der erfindungsgemäßen Suspensionskonzentrate auf Ölbasis erfolgt in der Weise, dass man die Komponenten in den jeweils gewünschten Verhältnissen miteinander vermischt. Die Reihenfolge, in der die Bestandteile miteinander vermengt werden, ist beliebig. Zweckmäßigerweise setzt man die festen Komponenten in feingemahlenem Zustand ein. Es ist aber auch möglich, die nach dem Vermengen der Bestandteile entstehende Suspension zunächst einer Grob- und dann einer Feinmahlung zu unterziehen, so dass die mittlere Teilchengröße unterhalb von 20 µm liegt. Bevorzugt sind Suspensionskonzentrate, in denen die festen Partikel eine mittlere Teilchengröße zwischen 1 und 10 µm aufweisen.

Die Temperaturen können bei der Durchführung des erfindungsgemäßen Verfahrens in einem bestimmten Bereich variiert werden. Man arbeitet im allgemeinen bei Temperaturen zwischen 10°C und 60°C, vorzugsweise zwischen 15°C und 40°C.

Zur Durchführung des erfindungsgemäßen Verfahrens kommen übliche Misch- und Mahlgeräte in betracht, die zur Herstellung von agrochemischen Formulierungen eingesetzt werden.

Bei den erfindungsgemäßen Zusammensetzungen handelt es sich um Formulierungen, die auch nach längerer Lagerung bei erhöhten Temperaturen oder in der Kälte stabil bleiben, da kein Kristallwachstum beobachtet wird. Sie lassen sich durch Verdünnen mit Wasser in homogene Spritzflüssigkeiten überfahren.

Die Aufwandmenge an den erfindungsgemäßen Zusammensetzungen kann innerhalb eines größeren Bereiches variiert werden. Sie richtet sich nach den jeweiligen agrochemischen Wirkstoffen und nach deren Gehalt in den Zusammensetzungen.

Die erfindungsgemäßen Zusammensetzungen eignen sich bei guter Pflanzenverträglichkeit, günstiger Warmblütertoxizität und guter Umweltverträglichkeit zum Schutz von Pflanzen und Pflanzenorganen, zur Steigerung der Ernteerträge, Verbesserung der Qualität des Erntegutes und zur Bekämpfung von tierischen Schädlingen, insbesondere Insekten, Spinnentieren, Helminthen, Nematoden und Mollusken, die in der Landwirtschaft, im Gartenbau, bei der Tierzucht, in Forsten, in Gärten und Freizeiteinrichtungen, im Vorrats- und Materialschutz sowie auf dem Hygienesektor vorkommen. Sie können vorzugsweise als Pflanzenschutzmittel eingesetzt werden. Sie sind gegen normal sensible und resistente Arten sowie gegen alle oder einzelne Entwicklungsstadien wirksam. Zu den oben erwähnten Schädlingen gehören:

Aus der Ordnung der Anoplura (Phthiraptera) z.B. Damalinia spp., Haematopinus spp., Linognathus spp., Pediculus spp., Trichodectes spp..

Aus der Klasse der Arachnida z.B. Acarus siro, Aceria sheldoni, Aculops spp., Aculus spp., Amblyomma spp., Argas spp., Boophilus spp., Brevipalpus spp., Bryobia praetiosa, Chorioptes spp., Dermanyssus gallinae, Eotetranychus spp., Epitrimerus pyri, Eutetranychus spp., Eriophyes spp., Hemitarsonemus spp., Hyalomma spp., Ixodes spp., Latrodectus mactans, Metatetranychus spp., Oligonychus spp., Omithodoros spp., Panonychus spp., Phyllocoptruta oleivora, Polyphagotarsonemus latus, Psoroptes spp., Rhipicephalus spp., Rhizoglyphus spp., Sarcoptes spp., Scorpio maurus, Stenotarsonemus spp., Tarsonemus spp., Tetranychus spp., Vasates lycopersici.

Aus der Klasse der Bivalva z.B. Dreissena spp..

Aus der Ordnung der Chilopoda z.B. Geophilus spp., Scutigera spp..

Aus der Ordnung der Coleoptera z.B. Acanthoscelides obtectus, Adoretus spp., Agelastica alni, Agriotes spp., Amphimallon solstitialis, Anobium punctatum, Anoplophora spp., Anthonomus spp., Anthrenus spp., Apogonia spp., Atomaria spp., Attagenus spp., Bruchidius obtectus, Bruchus spp., Ceuthorhynchus spp., Cleonus mendicus, Conoderus spp., Cosmopolites spp., Costelytra zealandica, Curculio spp., Cryptorhynchus lapathi, Dermestes spp., Diabrotica spp., Epilachna spp., Faustinus cubae, Gibbium psylloides, Heteronychus arator, Hylamorpha elegans, Hylotrupes bajulus, Hypera postica, Hypothenemus spp., Lachnosterna consanguinea, Leptinotarsa decemlineata, Lissorhoptrus oryzophilus, Lixus spp., Lyctus spp., Meligethes aeneus, Melolontha melolontha, Migdolus spp., Monochamus spp., Naupactus xanthographus, Niptus hololeucus, Oryctes rhinoceros, Oryzaephilus surinamensis, Otiorrhynchus sulcatus, Oxycetonia jucunda, Phaedon cochleariae, Phyllophaga spp., Popillia japonica, Premnotrypes spp., Psylliodes chrysocephala, Ptinus spp., Rhizobius ventralis, Rhizopertha dominica, Sitophilus spp., Sphenophorus spp., Sternechus spp., Symphyletes spp., Tenebrio molitor, Tribolium spp., Trogoderma spp., Tychius spp., Xylotrechus spp., Zabrus spp..

Aus der Ordnung der Collembola z.B. Onychiurus armatus.

Aus der Ordnung der Dermaptera z.B. Forficula auricularia.

Aus der Ordnung der Diplopoda z.B. Blaniulus guttulatus.

Aus der Ordnung der Diptera z.B. Aedes spp., Anopheles spp., Bibio hortulanus, Calliphora erythrocephala, Ceratitis capitata, Chrysomyia spp., Cochliomyia spp., Cordylobia anthropophaga, Culex spp., Cuterebra spp., Dacus oleae, Dermatobia hominis, Drosophila spp., Fannia spp., Gastrophilus spp., Hylemyia spp., Hyppobosca spp., Hypoderma spp., Liriomyza spp.. Lucilia spp., Musca spp., Nezara spp., Oestrus spp., Oscinella frit, Pegomyia hyoscyami, Phorbia spp., Stomoxys spp., Tabanus spp., Tannia spp., Tipula paludosa, Wohlfahrtia spp.

Aus der Klasse der Gastropoda z.B. Arion spp., Biomphalaria spp., Bulinus spp., Deroceras spp., Galba spp., Lymnaea spp., Oncomelania spp., Succinea spp..

Aus der Klasse der Helminthen z.B. Ancylostoma duodenale, Ancylostoma ceylanicum, Acylostoma braziliensis, Ancylostoma spp., Ascaris lubricoides, Ascaris spp., Brugia malayi, Brugia timori, Bunostomum spp:, Chabertia spp., Clonorchis spp., Cooperia spp., Dicrocoelium spp, Dictyocaulus filaria, Diphyllobothrium latum, Dracunculus medinensis, Echinococcus granulosus, Echinococcus multilocularis, Enterobius vermicularis, Faciola spp., Haemonchus spp., Heterakis sps., Hymenolepis nana, Hyostrongulus spp., Loa Loa, Nematodirus spp., Oesophagostomum spp., Opisthorchis spp., Onchocerca volvulus, Ostertagia spp., Paragonimus spp., Schistosomen spp, Strongyloides fuelleborni, Strongyloides stercoralis, Stronyloides spp., Taenia saginata, Taenia solium, Trichinella spiralis, Trichinella nativa, Trichinella britovi, Trichinella nelsoni, Trichinella pseudopsiralis, Trichostrongulus spp., Trichuris trichuria, Wuchereria bancrofti.

Weiterhin lassen sich Protozoen, wie Eimeria, bekämpfen.

Aus der Ordnung der Heteroptera z.B. Anasa tristis, Antestiopsis spp., Blissus spp., Calocoris spp., Campylomma livida, Cavelerius spp., Cimex spp., Creontiades dilutus, Dasynus piperis, Dichelops furcatus, Diconocoris hewetti, Dysdercus spp., Euschistus spp., Eurygaster spp., Heliopeltis spp., Horcias nobilellus, Leptocorisa sps., Leptoglossus phyllopus, Lygus spp., Macropes excavatus, Miridae, Nezara spp., Oebalus spp., Pentomidae, Piesma quadrata, Piezodorus spp., Psallus seriatus, Pseudacysta persea, Rhodnius spp., Sahlbergella singularis, Scotinophora spp., Stephanitis nashi, Tibraca spp., Triatoma spp.

Aus der Ordnung der Homoptera z.B. Acyrthosipon spp., Aeneolamia spp., Agonoscena spp., Aleurodes spp., Aleurolobus barodensis, Aleurothrixus spp., Amrasca spp., Anuraphis cardui, Aonidiella spp., Aphanostigma piri, Aphis spp., Arboridia apicalis, Aspidiella spp., Aspidiotus spp., Atanus spp., Aulacorthum solani, Bemisia spp., Brachycaudus helichrysii, Brachycolus spp., Brevicoryne brassicae, Calligypona marginata, Carneocephala fulgida, Ceratovacuna lanigera, Cercopidae, Ceroplastes spp., Chaetosiphon fragaefolii, Chionaspis tegalensis, Chlorita onukii, Chromaphis juglandicola, Chrysomphalus ficus, Cicadulina mbila, Coccomytilus halli, Coccus sps., Cryptomyzus ribis, Dalbulus spp., Dialeurodes spp., Diaphorina spp., Diaspis sps., Doralis spp., Drosicha spp., Dysaphis spp., Dysmicoccus spp., Empoasca spp., Eriosoma spp., Erythroneura spp., Euscelis bilobatus, Geococcus coffeae, Homalodisca coagulata, Hyalopterus arundinis, Icerya spp., Idiocerus spp., Idioscopus spp., Laodelphax striatellus, Lecanium spp., Lepidosaphes spp., Lipaphis erysimi, Macrosiphum spp., Mahanarva fimbriolata, Melanaphis sacchari, Metcalfiella spp., Metopolophium dirhodum, Monellia costalis, Monelliopsis pecanis, Myzus spp., Nasonovia ribisnigri, Nephotettix spp., Nilaparvata lugens, Oncometopia spp., Orthezia praelonga, Parabemisia myricae, Paratrioza spp., Parlatoria spp., Pemphigus spp., Peregrinus maidis, Phenacoccus spp., Phloeomyzus passerinii, Phorodon humuli, Phylloxera spp., Pinnaspis aspidistrae, Planococcus spp., Protopulvinaria pyriformis, Pseudaulacaspis pentagona, Pseudococcus spp., Psylla spp., Pteromalus spp., Pyrilla spp., Quadraspidiotus spp., Quesada gigas, Rastrococcus spp., Rhopalosiphum spp., Saissetia spp., Scaphoides titanus, Schizaphis graminum, Selenaspidus articulatus, Sogata spp., Sogatella furcifera, Sogatodes spp., Stictocephala festina, Tenalaphara malayensis, Tinocallis caryaefoliae, Tomaspis spp., Toxoptera sps., Trialeurodes vaporariorum, Trioza spp., Typhlocyba spp., Unaspis spp., Viteus vitifolii.

Aus der Ordnung der Hymenoptera z.B. Diprion spp., Hoplocampa spp., Lasius spp., Monomorium pharaonis, Vespa spp..

Aus der Ordnung der Isopoda z.B. Armadillidium vulgare, Oniscus asellus, Porcellio scaber.

Aus der Ordnung der Isoptera z.B. Reticulitermes spp., Odontotermes spp..

Aus der Ordnung der Lepidoptera z.B. Acronicta major, Aedia leucomelas, Agrotis spp., Alabama argillacea, Anticarsia spp., Barathra brassicae, Bucculatrix thurberiella, Bupalus piniarius, Cacoecia podana, Capua retirulana, Carpocapsa pomonella, Cheimatobia brumata, Chilo spp., Choristoneura fumiferana, Clysia ambiguella, Cnaphalocerus spp., Earias insulana, Ephestia kuehniella, Euproctis chrysorrhoea, Euxoa spp., Feltia spp., Galleria mellonella, Helicoverpa spp., Heliothis spp., Hofmannophila pseudospretella, Homona magnanima, Hyponomeuta padella, Laphygma. spp., Lithocolletis blancardella, Lithophane antennata, Loxagrotis albicosta, Lymantria spp., Malacosoma neustria, Mamestra brassicae, Mocis repanda, Mythimna separata, Oria spp., Oulema oryzae, Panolis flammea, Pectinophora gossypiella, Phyllocnistis citrella, Pieris spp., Plutella xylostella, Prodenia spp., Pseudaletia spp., Pseudoplusia includens, Pyrausta nubilalis, Spodoptera spp., Thermesia gemmatalis, Tinea pellionella, Tineola bisselliella, Tortrix viridana, Trichoplusia spp..

Aus der Ordnung der Orthoptera z.B. Acheta domesticus, Blatta orientalis, Blattella germanica, Gryllotalpa spp., Leucophaea maderae, Locusta spp., Melanoplus spp., Periplaneta americana, Schistocerca gregaria.

Aus der Ordnung der Siphonaptera z.B. Ceratophyllus spp., Xenopsylla cheopis.

Aus der Ordnung der Symphyla z.B. Scutigerella immaculata.

Aus der Ordnung der Thysanoptera z.B. Baliothrips biformis, Enneothrips flavens, Frankliniella spp., Heliothrips spp., Hercinothrips femoralis, Kakothrips spp., Rhipiphorothrips cruentatus, Scirtothrips spp., Taeniothrips cardamoni, Thrips spp..

Aus der Ordnung der Thysanura z.B. Lepisma saccharina.

Zu den pflanzenparasitären Nematoden gehören z.B. Anguina spp., Aphelenchoides spp., Belonoaimus spp., Bursaphelenchus spp., Ditylenchus dipsaci, Globodera spp., Heliocotylenchus spp., Heterodera spp., Longidorus spp., Meloidogyne spp., Pratylenchus spp., Radopholus similis, Rotylenchus spp., Trichodorus spp., Tylenchorhynchus spp., Tylenchulus spp., Tylenchulus semipenetrans, Xiphinema spp..

Die erfindungsgemäßen Zusammensetzungen können gegebenenfalls in bestimmten Konzentrationen bzw. Aufwandmengen auch als Herbizide, Safener, Wachstumsregulatoren oder Mittel zur Verbesserung der Pflanzeneigenschaften, oder als Mikrobizide, beispielsweise als Fungizide, Antimykotika, Bakterizide, Virizide (einschließlich Mittel gegen Viroide) oder als Mittel gegen MLO (Mycoplasma-like-organism) und RLO (Rickettsia-like-organism) verwendet werden.

Die erfindungsgemäßen Zusammensetzungen können neben den bereits zuvor genannten agrochemischen Wirkstoffen als Mischungspartner weitere Wirkstoffe wie Insektizide, Lockstoffe, Sterilantien, Bakterizide, Akarizide, Nematizide, Fungizide, wachstumsregulierende Stoffe, Herbizide, Safener, Düngemittel oder Semiochemicals enthalten.

Besonders günstige Mischungspartner sind z.B. die folgenden:

### Fungizide:

Inhibitoren der Nucleinsäure Synthese
Benalaxyl, Benalaxyl-M, Bupirimat, Chiralaxyl, Clozylacon, Dimethirimol, Ethirimol, Furalaxyl, Hymexazol, Mefenoxam, Metalaxyl, Metalaxyl-M, Ofurace, Oxadixyl, Oxolinsäure
Inhibitoren der Mitose und Zellteilung
Benomyl, Carbendazim, Diethofencarb, Ethaboxam, Fuberidazole, Pencycuron, Thiabendazol, Thiophanat-methyl, Zoxamid
Inhibitoren der Atmungskette Komplex I
Diflumetorim
Inhibitoren der Atmungskette Komplex II
Boscalid, Carboxin, Fenfuram, Flutolanil, Furametpyr, Furmecyclox, Mepronil, Oxycarboxin, Penthiopyrad, Thifluzamid
Inhibitoren der Atmungskette Komplex III
Azoxystrobin; Cyazofamid, Dimoxystrobin, Enestrobin, Famoxadon, Fenamidon, Fluoxastrobin, Kresoximmethyl, Metominostrobin, Orysastrobin, Pyraclostrobin, Picoxystrobin, Trifloxystrobin Entkoppler
Dinocap, Fluazinam
Inhibitoren der ATP Produktion
Fentinacetat, Fentinchlorid, Fentinhydroxid, Silthiofam
Inhibitoren der Aminosäure- und Proteinbiosynthese,
Andoprim, Blasticidin-S, Cyprodinil, Kasugamycin, Kasugamycinhydrochlorid Hydrat, Mepanipyrim, Pyrimethanil
Inhibitoren der Signal-Transduktion
Fenpiclonil, Fludioxonil, Quinoxyfen
Inhibitoren der Fett- und Membran Synthese
Chlozolinat, Iprodion, Procymidon, Vinclozolin
Ampropylfos, Kalium-Ampropylfos, Edifenphos, Etridiazol, Iprobenfos (IBP), Isoprothiolan, Pyrazophos
Tolclofos-methyl, Biphenyl
Iodocarb, Propamocarb, Propamocarb hydrochlorid, Propamocarb-Fosetylat
Inhibitoren der Ergosterol Biosynthese
Fenhexamid,
Azaconazol, Bitertanol, Bromuconazol, Cyproconazol, Diclobutrazol, Difenoconazol, Diniconazol, Diniconazol-M, Epoxiconazol, Etaconazol, Fenarimol, Fenbuconazol, Fluquinconazol, Flurprimidol, Flusilazol, Flutriafol, Furconazol, Furconazol-cis, Hexaconazol, Imazalil, Imazalilsulfat Imibenconazol, Ipconazol, Metconazol, Myclobutanil, Nuarimol, Oxpoconazol, Paclobutrazol, Penconazol, Pefurazoat Prochloraz, Propiconazol, Prothioconazol, Pyrifenox, Simeconazol, Tebuconazol, Tetraconazol, Triadimefon, Triadimenol, Triflumizol Triforin, Triticonazol, Uniconazol, Voriconazol, Viniconazol,
Aldimorph, Dodemorph, Dodemorphacetat, Fenpropidin, Fenpropimorph, Spiroxamin, Tridemorph,
Naftifin, Pyributicarb, Terbinafin
Inhibitoren der Zellwand Synthese
Benthiavalicarb, Bialaphos, Dimethomorph, Flumorph, Iprovalicarb, Mandipropamid, Polyoxins, Polyoxorim, Validamycin A
Inhibitoren der Melanin Biosynthese
Carpropamid, Diclocymet, Fenoxanil, Phthalid, Pyroquilon, Tricyclazol
Resistenzinduktion
Acibenzolar-S-methyl, Probenazol, Tiadinil
Multisite
Captafol, Captan, Chlorothalonil, Kupfersalze wie: Kupferhydroxid, Kupfernaphthenat, Kupferoxychlorid, Kupfersulfat, Kupferoxid, Oxin-Kupfer und Bordeaux Mischung, Dichlofluanid, Dithianon, Dodin, Dodin freie Base, Ferbam, Folpet, Fluorofolpet, Guazatin, Guazatinacetat, Iminoctadin, Iminoctadinalbesilat, Iminoctadintriacetat, Mankupfer, Mancozeb, Maneb, Metiram, Metiram Zink, Propineb, Schwefel und Schwefelpräparate enthaltend Calciumpolysulphid, Thiram, Tolylfluanid, Zineb, Ziram
Weitere Fungizide
Amibromdol, Benthiazol, Bethoxazin, Capsimycin, Carvon, Chinomethionat, Chloropicrin, Cufraneb, Cyflufenamid, Cymoxanil, Dazomet, Debacarb, Diclomezine, Dichlorophen, Dicloran, Difenzoquat, Difenzoquat Methylsulphat, Diphenylamin, Ferimzon, Flumetover, Flusulfamid, Fluopicolid, Fluoroimid, Fosetyl-Aluminium, Fosetyl-Caclcium, Fosetyl-Natrium, Hexachlorobenzol, 8-Hydroxychinolinsulfat, Irumamycin, Methasulphocarb, Metrafenon, Methyl Isothiocyanat, Mildiomycin, Natamycin, Nickel dimethyldithiocarbamat, Nitrothal-isopropyl, Octhilinon, Oxamocarb, Oxyfenthiin, Pentachlorphenol und Salze, 2-Phenylphenol und Salze, Piperalin, Propanosin-Natrium, Proquinazid, Pyribencarb, Pyrrolnitrin, Quintozen, Tecloftalam, Tecnazen, Triazoxid, Trichlamid, Valiphenal, Zarilamid,
2-(2-{[6-(3-Chlor-2-methylphenoxy)-5-fluorpyrimidin-4-yl]oxy}phenyl)-2-(methoxyimino)-N-methylacetamid,
2-[[[[1-[3(1Fluor-2-phenylethyl)oxy] phenyl] ethyliden]amino]oxy]methyl]-alpha-(methoxyimino)-N-methyl-alpha-benzacetamid,
cis-1-(4-Chlorphenyl)-2-(1H-1,2,4-triazol-1-yl)-cycloheptanol,
1-[(4-Methoxyphenoxy)methyl]-2,2-dimethylpropyl-1H-imidazol-1-carbonsäure,
2,3,5,6-Tetrachlor-4-(methylsulfonyl)-pyridin,
2-Butoxy-6-iod-3-propyl-benzopyranon-4-on,
2-Chlor-N-(2,3-dihydro-1,1,3-trimethyl-1H-inden-4-yl)-3-pyridincarboxamid,
3,4,5-Trichlor-2,6-pyridindicarbonitril,
3,4-Dichlor-N-(2-cyanophenyl)isothiazol-5-carboxamid (Isotianil)
3-[5-(4-Chlorphenyl)-2,3-dimethylisoxazolidin-3-yl]pyridin,
5-Chlor-6-(2,4,6-trifluorophenyl)-N-[(1R)-1,2,2-trimethylpropyl][1,2,4]triazolo[1,5-a]pyrimidin-7-amin,
5-Chlor-7-(4-methylpiperidin-1-yl)-6-(2,4,6-trifluorophenyl)[1,2,4]triazolo[1,5-a]pyrimidin, 5-Chlor-N-[(1R)-1,2-dimethylpropyl]-6-(2,4,6-trifluorophenyl) [1,2,4]triazolo[1,5-a]pyrimidin-7-amin,
Methyl 2-[[[cyclopropyl[(4-methoxyphenyl) imino]methyl]thio]methyl]-alpha.-(methoxymethylen)-benzacetat,
Methyl 1-(2,3-dihydro-2,2-dimethyl-1H-inden-1-yl)-1H-imidazole-5-carboxylat,
N-(3',4'-dichlor-5-fluorbiphenyl-2-yl)-3-(difluormethyl)-1-methyl-1H-pyrazol-4-carboxamid,
N-(3-Ethyl-3,5,5-trimethyl-cyclohexyl)-3-formylamino-2-hydroxy-benzamid,
N-(4-Chlor-2-nitrophenyl)-N-ethyl-4-methyl-benzenesulfonamid,
N-(4-chlorbenryl)-3-[3-methoxy-4-(prop-2-yn-1-yloxy)phenyl]propanamid,
N-[(4-chlorphenyl)(cyano)methyl]-3-[3-methoxy-4-(prop-2-yn-1-yloxy)phenyl]propanamid,
N-(5-Brom-3-chlorpyridin-2-yl)methyl-2,4-dichlornicotinamid,
N-[1-(5-Brom-3-chloropyridin-2-yl)ethyl]-2,4-dichloronicotinamid,
(2S)-N-[2-[4-[[3-(4-chlorophenyl)-2-propinyl]oxy]-3-methoxyphenyl]ethyl]-3-methyl-2-[(methylsulfonyl)amino]-butanamid,
N-{(Z)-[(cyclopropylmethoxy) imino][6-(difluormethoxy)-2,3-difluorphenyl]methyl}-2-benzacetamid,
N-{2-[1,1'-bi(cyclopropyl)2-yl]phenyl}-3-(difluormethyl)-1-methyl-1H-pyrazol-4-carboxamid,
N-{2-[3-Chlor-5-(trifluormethyl)pyridin-2-yl]ethyl}-2-(trifluoromethyl)benzamid,
N-ethyl-N-methyl-N'-{2-methyl-5-(trifluormethyl)-4-[3-(trimethylsilyl)propoxy]phenyl}imidoformamid,
O-[1-[(4-Methoxyphenoxy)methyl]-2,2-dimethylpropyl]-1H-imidazol-1- carbothioic acid,
2-Amino-4-methyl-N-phenyl-5-thiazolcarboxamid,
2,4-Dihydro-5-methoxy-2-methyl-4-[[[[1-[3-(trifluoromethyl)-phenyl]-ethyliden]-amino]-oxy]-methyl]-phenyl]-3H-1,2,4-triazol-3-on(CAS Nr. 185336-79-2),
N-(6-Methoxy-3-pyridinyl)-cyclopropan carboxamid,

### Bakterizide:

Bronopol, Dichlorophen, Nitrapyrin, Nickel-Dimethyldithiocarbamat, Kasugamycin, Octhilinon, Furancarbonsäure, Oxytetracyclin, Probenazol, Streptomycin, Tecloftalam, Kupfersulfat und andere Kupfer-Zubereitungen.

### Insektizide / Akarizide / Nematizide:

### Acetylcholinesterase (AChE) Inhibitoren

Carbamate, zum Beispiel Alanycarb, Aldicarb, Aldoxycarb, Allyxycarb, Aminocarb, Bendiocarb, Benfuracarb, Bufencarb, Butacarb, Butocarboxim, Butoxycarboxim, Carbaryl, Carbofuran, Carbosulfan, Cloethocarb, Dimetilan, Ethiofencarb, Fenobucarb, Fenothiocarb, Formetanate, Furathiocarb, Isoprocarb, Metam-sodium, Methiocarb, Methomyl, Metolcarb, Oxamyl, Pirimicarb, Promecarb, Propoxur, Thiodicarb, Thiofanox, Trimethacarb, XMC, Xylylcarb, Triazamate
Organophosphate, zum Beispiel Acephate, Azamethiphos, Azinphos (-methyl, -ethyl), Bromophos-ethyl, Bromfenvinfos (-methyl), Butathiofos, Cadusafos, Carbophenothion, Chlorethoxyfos, Chlorfenvinphos, Chlormephos, Chlorpyrifos (-methyl/-ethyl), Coumaphos, Cyanofenphos, Cyanophos, Chlorfenvinphos, Demeton-S-methyl, Demeton-S-methylsulphon, Dialifos, Diazinon, Dichlofenthion, Dichlorvos/DDVP, Dicrotophos, Dimethoate, Dimethylvinphos, Dioxabenzofos, Disulfoton, EPN, Ethion, Ethoprophos, Etrimfos, Famphur, Fenamiphos, Fenitrothion, Fensulfothion, Fenthion, Flupyrazofos, Fonofos, Formothion, Fosmethilan, Fosthiazate, Heptenophos, Iodofenphos, Iprobenfos, Isazofos, Isofenphos, Isopropyl O-salicylate, Isoxathion, Malathion, Mecarbam, Methacrifos, Methamidophos, Methidathion, Mevinphos, Monocrotophos, Naled, Omethoate, Oxydemeton-methyl, Parathion (-methyl/-ethyl), Phenthoate, Phorate, Phosalone, Phosmet, Phosphamidon, Phosphocarb, Phoxim, Pirimiphos (-methyl/-ethyl), Profenofos, Propaphos, Propetamphos, Prothiofos, Prothoate, Pyraclofos, Pyridaphenthion, Pyridathion, Quinalphos, Sebufos, Sulfotep, Sulprofos, Tebupirimfos, Temephos, Terbufos, Tetrachlorvinphos, Thiometon, Triazophos, Triclorfon, Vamidothion Natrium-Kanal-Modulatoren / Spannungsabhängige Natrium-Kanal-Blocker
Pyrethroide, zum Beispiel Acrinathrin, Allethrin (d-cis-trans, d-trans), Beta-Cyfluthrin, Bifenthrin, Bioallethrin, Bioallethrin-S-cyclopentyl-isomer, Bioethanomethrin, Biopermethrin, Bioresmethrin, Chlovaporthrin, Cis-Cypermethrin, Cis-Resmethrin, Cis-Permethrin, Clocythrin, Cycloprothrin, Cyfluthrin, Cyhalothrin, Cypermethrin (alpha-, beta-, theta-, zeta-), Cyphenothrin, Deltamethrin, Empenthrin (1R-isomer), Esfenvalerate, Etofenprox, Fenfluthrin, Fenpropathrin, Fenpyrithrin, Fenvalerate, Flubrocythrinate, Flucythrinate, Flufenprox, Flumethrin, Fluvalinate, Fubfenprox, Gamma-Cyhalothrin, Imiprothrin, Kadethrin, Lambda- Cyhalothrin, Metofluthrin, Permethrin (cis-, trans-), Phenothrin (1R-trans isomer), Prallethrin, Profluthrin, Protrifenbute, Pyresmethrin, Resmethrin, RU 15525, Silafluofen, Tau-Fluvalinate, Tefluthrin, Terallethrin, Tetramethrin (-1R-isomer), Tralomethrin, Transfluthrin, ZXI 8901, Pyrethrins (pyrethrum)
DDT
Oxadiazine,
   zum Beispiel Indoxacarb
Semicarbazon,
   zum Beispiel Metaflumizon (BAS3201)
Acetylcholin-Rezeptor-Agonisten/-Antagonisten
Chloronicotinyle,
   zum Beispiel Acetamiprid, Clothianidin, Dinotefuran, Imidacloprid, Nitenpyram, Nithiazine, Thiacloprid, Thiamethoxam
Nicotine, Bensultap, Cartap
Acetylcholin-Rezeptor-Modulatoren
Spinosyne,
   zum Beispiel Spinosad
GABA-gesteuerte Chlorid-Kanal-Antagonisten
Organochlorine,
   zum Beispiel Camphechlor, Chlordane, Endosulfan, Gamma-HCH, HCH, Heptachlor, Lindane, Methoxychlor
Fiprole,
   zum Beispiel Acetoprole, Ethiprole, Fipronil, Pyrafluprole, Pyriprole, Vaniliprole Chlorid-Kanal-Aktivatoren
Mectine,
   zum Beispiel Abamectin, Emamectin, Emamectin-benzoate, Ivermectin, Lepimectin, Milbemycin
Juvenilhormon-Mimetika,
   zum Beispiel Diofenolan, Epofenonane, Fenoxycarb, Hydroprene, Kinoprene, Methoprene, Pyriproxifen, Triprene
Ecdysonagonisten/disruptoren
Diacylhydrazine,
   zum Beispiel Chromafenozide, Halofenozide, Methoxyfenozide, Tebufenozide
   Inhibitoren der Chitinbiosynthese
Benzoylharnstoffe,
   zum Beispiel Bistrifluron, Chlofluazuron, Diflubenzuron, Fluazuron, Flucycloxuron, Flufenoxuron, Hexaflumuron, Lufenuron, Novaluron, Noviflumuron, Penfluron, Teflubenzuron, Triflumuron
Buprofezin
Cyromazine
Inhibitoren der oxidativen Phosphorylierung, ATP-Disruptoren
Diafenthiuron
Organozinnverbindungen,
   zum Beispiel Azocyclotin, Cyhexatin, Fenbutatin-oxide
Entkoppler der oxidativen Phosphorylierung durch Unterbrechung des H-Protongradienten
Pyrrole,
   zum Beispiel Chlorfenapyr
Dinitrophenole,
   zum Beispiel Binapacyrl, Dinobuton, Dinocap, DNOC, Meptyldinocap
Site-I-Elektronentransportinhibitoren
METI's,
   zum Beispiel Fenazaquin, Fenpyroximate, Pyrimidifen, Pyridaben, Tebufenpyrad, Tolfenpyrad
Hydramethylnon
Dicofol
Site-II-Elektronentransportinhibitoren
Rotenone
Site-III-Elektronentransportinhibitoren
Acequinocyl, Fluacrypyrim
Mikrobielle Disruptoren der Insektendarmmembran
Bacillus thuringiensis-Stämme
Inhibitoren der Fettsynthese
Tetronsäuren,
zum Beispiel Spirodiclofen, Spiromesifen,
Tetramsäuren,
zum Beispiel Spirotetramat, cis-3-(2,5-dimethylphenyl)-4-hydroxy-8-methoxy-1-azaspiro[4.5]dec-3-en-2-on
Carboxamide,
zum Beispiel Flonicamid
Oktopaminerge Agonisten,
zum Beispiel Amitraz
Inhibitoren der Magnesium-stimulierten ATPase,
Propargite
Nereistoxin-Analoge,
zum Beispiel Thiocyclam hydrogen oxalate, Thiosultap-sodium
Agonisten des Ryanodin-Rezeptors,
Benzoesäuredicarboxamide,
zum Beispiel Flubendiamid
Anthranilamide,
zum Beispiel Rynaxypyr (3-bromo-N-{4-chloro-2-methyl-6-[(methylamino)carbonyl]phenyl}-1-(3-chloropyridin-2-yl)-1H-pyrazole-5-carboxamide)
Biologika, Hormone oder Pheromone
Azadirachtin, Bacillus spec., Beauveria spec., Codlemone, Metarrhizium spec., Paecilomyces spec., Thuringiensin, Verticillium spec.
Wirkstoffe mit unbekannten oder nicht spezifischen Wirkmechanismen
Begasungsmittel,
   zum Beispiel Aluminium phosphide, Methyl bromide, Sulfuryl fluoride
Fraßhemmer,
   zum Beispiel Cryolite, Flonicamid, Pymetrozine
Milbenwachstumsinhibitoren,
   zum Beispiel Clofentezine, Etoxazole, Hexythiazox
Amidoflumet, Benclothiaz, Benzoximate, Bifenazate, Bromopropylate, Buprofezin, Chinomethionat, Chlordimeform, Chlorobenzilate, Chloropicrin, Clothiazoben, Cycloprene, Cyflumetofen, Dicyclanil, Fenoxacrim, Fentrifanil, Flubenzimine, Flufenerim, Flutenzin, Gossyplure, Hydramethylnone, Japonilure, Metoxadiazone, Petroleum, Piperonyl butoxide, Potassium oleate, Pyridalyl, Sulfluramid, Tetradifon, Tetrasul, Triarathene,Verbutin

Auch eine Mischung mit anderen bekannten Wirkstoffen, wie Herbiziden oder auch mit Mitteln zur Verbesserung der Pflanzeneigenschaften ist möglich.

Die erfindungsgemäßen Zusammensetzungen können ferner beim Einsatz als Insektizide in ihren handelsüblichen Formulierungen sowie in den aus diesen Formulierungen bereiteten Anwendungsformen in Mischung mit Synergisten vorliegen. Synergisten sind Verbindungen, durch die die Wirkung der in den erfindungsgemäßen Zusammensetzungen enthaltenen Wirkstoffe gesteigert wird, ohne daß der zugesetzte Synergist selbst aktiv wirksam sein muß.

Die erfindungsgemäßen Zusammensetzungen können ferner beim Einsatz als Insektizide in ihren handelsüblichen Formulierungen sowie in den aus diesen Formulierungen bereiteten Anwendungsformen in Mischungen mit Hemmstoffen vorliegen, die einen Abbau des enthaltenen agrochemischen Wirkstoffes nach Anwendung in der Umgebung der Pflanze, auf der Oberfläche von Pflanzenteilen oder in pflanzlichen Geweben vermindern.

Der Wirkstoffgehalt der aus den handelsüblichen Formulierungen bereiteten Anwendungsformen kann in weiten Bereichen variieren. Die Wirkstoffkonzentration der Anwendungsformen kann von 0,00000001 bis zu 95 Gew.% Wirkstoff, vorzugsweise zwischen 0,00001 und 1 Gew.% liegen.

Die Anwendung geschieht in einer den Anwendungsformen angepaßten üblichen Weise.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Sproß, Blatt, Blüte und Wurzel verstanden werden, wobei beispielhaft Blätter, Nadeln, Stengel, Stämme, Blüten, Fruchtkörper, Früchte und Saatgut sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Saatgut.

Die erfindungsgemäße Behandlung der Pflanzen und Pflanzenteile mit den Zusammensetzungen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen, Injizieren und bei Vermehrungsmaterial, insbesondere bei Saatgut, weiterhin durch ein- oder mehrschichtiges Umhüllen.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wurden (Genetically Modified Organisms) und deren Teile behandelt. Die Begriffe "Teile" bzw. "Teile von Pflanzen" oder "Pflanzenteile" wurden oben erläutert.

Besonders bevorzugt werden erfindungsgemäß Pflanzen der jeweils handelsüblichen oder in Gebrauch befindlichen Pflanzensorten behandelt. Unter Pflanzensorten versteht man Pflanzen mit neuen Eigenschaften ("Traits"), die sowohl durch konventionelle Züchtung, durch Mutagenese oder durch rekombinante DNA-Techniken gezüchtet worden sind. Dies können Sorten, Bio- und Genotypen sein.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Zuckerrüben, Tomaten, Erbsen und andere Gemüsesorten, Baumwolle, Tabak, Raps, sowie Obstpflanzen (mit den Früchten Äpfel, Birnen, Zitrusfrüchten und Weintrauben) erwähnt, wobei Mais, Soja, Kartoffel, Baumwolle, Tabak und Raps besonders hervorgehoben werden. Als Eigenschaften ("Traits") werden besonders hervorgehoben die erhöhte Abwehr der Pflanzen gegen Insekten, Spinnentiere, Nematoden und Schnecken durch in den Pflanzen entstehende Toxine, insbesondere solche, die durch das genetische Material aus Bacillus Thuringiensis (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im folgenden "Bt Pflanzen"). Als Eigenschaften ("Traits") werden auch besonders hervorgehoben die erhöhte Abwehr von Pflanzen gegen Pilze, Bakterien und Viren durch Systemische Akquirierte Resistenz (SAR), Systemin, Phytoalexine, Elicitoren sowie Resistenzgene und entsprechend exprimierte Proteine und Toxine. Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden. Als Beispiele für Herbizid-tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid- resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Die aufgeführten Pflanzen können besonders vorteilhaft erfindungsgemäß mit den erfindungsgemäßen Zusammensetzungen behandelt werden. Die bei den Zusammensetzungen oben angegebenen Vorzugsbereiche gelten auch für die Behandlung dieser Pflanzen. Besonders hervorgehoben sei die Pflanzenbehandlung mit den im vorliegenden Text speziell aufgeführten Zusammensetzungen.

Außerdem wurde gefunden, daß die erfindungsgemäßen Zusammensetzungen eine hohe insektizide. Wirkung gegen Insekten zeigen, die technische Materialien zerstören.

Beispielhaft und vorzugsweise - ohne jedoch zu limitieren - seien die folgenden Insekten genannt:

Käfer wie Hylotrupes bajulus, Chlorophorus pilosis, Anobium punctatum, Xestobium rufovillosum, Ptilinus pecticornis, Dendrobium pertinex, Ernobius mollis, Priobium carpini, Lyctus brunneus, Lyctus africanus, Lyctus planicollis, Lyctus linearis, Lyctus pubescens, Trogoxylon aequale, Minthes rugicollis, Xyleborus spec. Tryptodendron spec. Apate monachus, Bostrychus capucins, Heterobostrychus brunneus, Sinoxylon spec. Dinoderus minutus;

Hautflügler wie Sirex juvencus, Urocerus gigas, Urocerus gigas taignus, Urocerus augur;

Termiten wie Kalotermes flavicollis, Cryptotermes brevis, Heterotermes indicola, Reticulitermes flavipes, Reticulitermes santonensis, Reticulitermes lucifugus, Mastotermes darwiniensis, Zootermopsis nevadensis, Coptotermes formosanus;

Borstenschwänze wie Lepisma saccharina.

Unter technischen Materialien sind im vorliegenden Zusammenhang nicht-lebende Materialien zu verstehen, wie vorzugsweise Kunststoffe, Klebstoffe, Leime, Papiere und Kartone, Leder, Holz, Holzverarbeitungsprodukte und Anstrichmittel.

Die anwendungsfertigen Mittel können gegebenenfalls noch weitere Insektizide und gegebenenfalls noch ein oder mehrere Fungizide enthalten.

Hinsichtlich möglicher zusätzlicher Zumischpartner sei auf die oben genannten Insektizide und Fungizide verwiesen.

### Herstellungsbeispiele

### Beispiel 1

Zur Herstellung eines Suspensionskonzentrates werden

| |
|---|
| 100 g Polyoxyethylen-sorbitol-oleat |
| 112 g eines Gemisches aus Alkylarylsulphonat, Ethylhexanol und einem einfach verzweigten Alkoholethoxylat |
| 2 g Zitronensäure Wasserfrei |
| 0,5 g Polydimethylsiloxan |
| 2 g Butylhydroxytoluol |
| 10 g hydriertes Castoröl |
| 230 g Ethyl-hexyl-alkoxylat der Formel |

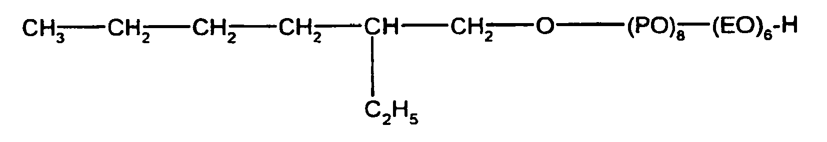

in welcher
- EO: für -CH₂-CH₂-O- steht,
- PO: für 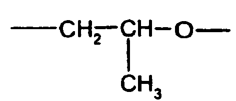
steht und
die Zahlen 8 und 6 Durchschnittswerte darstellen und
431,5 g Sonnenblumenöl
miteinander vermischt und bei Temperaturen bis maximal 60°C so lange gerührt, bis eine homogene Lösung entsteht. Zu dieser Lösung werden unter Rühren bei Raumtemperatur 102 g Thiacloprid und 10 g Deltamethrin gegeben. Nach beendeter Zugabe wird noch 10 Minuten bei Raumtemperatur nachgerührt. Die dabei entstehende homogene Suspension wird zunächst einer Grob- und dann einer Feinmahlung unterworfen, so dass eine Suspension erhalten wird, in der 90 % der Feststoffpartikel eine Teilchengröße unter 6 µm aufweisen.

### Beispiel 2

Zur Herstellung eines Suspensionskonzentrates werden

| |
|---|
| 100 g Polyoxyethylen-sorbitol-oleat |
| 112 g eines Gemisches aus Alkylarylsulphonat, Ethylhexanol und einem einfach verzweigten Alkoholethoxylat |
| 2 g Zitronensäure Wasserfrei |
| 0,5 g Polydimethylsiloxan |
| 2 g Butylhydroxytoluol |
| 15 g hydriertes Castoröl |
| 230 g Ethyl-hexyl-alkoxylat der Formel |

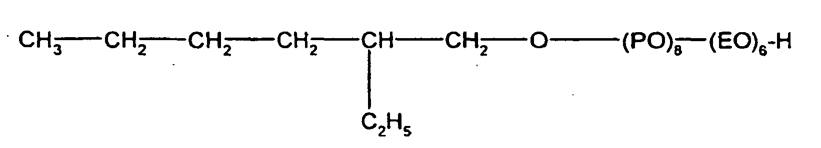

in welcher
- EO: für -CH₂-CH₂-O- steht,
- PO: für 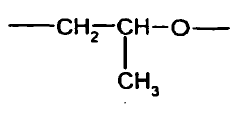
steht und
die Zahlen 8 und 6 Durchschnittswerte darstellen und
426,5 g Sonnenblumenöl
miteinander vermischt und bei Temperaturen bis maximal 60°C so lange gerührt, bis eine homogene Lösung entsteht. Zu dieser Lösung werden unter Rühren bei Raumtemperatur 102 g Thiacloprid und 10 g Deltamethrin gegeben. Nach beendeter Zugabe wird noch 10 Minuten bei Raumtemperatur nachgerührt. Die dabei entstehende homogene Suspension wird zunächst einer Grob- und dann einer Feinmahlung unterworfen, so dass eine Suspension erhalten wird, in der 90 % der Feststoffpartikel eine Teilchengröße unter 6 µm aufweisen.

### Beispiel 3

Zur Herstellung eines Suspensionskonzentrates werden

| |
|---|
| 100 g Polyoxyethylen-sorbitol-oleat |
| 112 g eines Gemisches aus Alkylarylsulphonat, Ethylhexanol und einem einfach verzweigten Alkoholethoxylat |
| 2 g Zitronensäure Wasserfrei |
| 0,5 g Polydimethylsiloxan |
| 2 g Butylhydroxytoluol |
| 25 g hydriertes Castoröl |
| 230 g Ethyl-hexyl-alkoxylat der Formel |

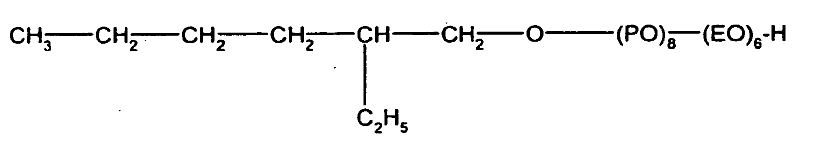

in welcher
- EO: für -CH₂-CH₂-O- steht,

- PO: für 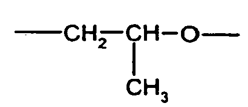
steht und
die Zahlen 8 und 6 Durchschnittswerte darstellen und
416,5 g Sonnenblumenöl
miteinander vermischt und bei Temperaturen bis maximal 60°C so lange gerührt, bis eine homogene Lösung entsteht. Zu dieser Lösung werden unter Rühren bei Raumtemperatur 102 g Thiacloprid und 10 g Deltamethrin gegeben. Nach beendeter Zugabe wird noch 10 Minuten bei Raumtemperatur nachgerührt. Die dabei entstehende homogene Suspension wird zunächst einer Grob- und dann einer Feinmahlung unterworfen, so dass eine Suspension erhalten wird, in der 90 % der Feststoffpartikel eine Teilchengröße unter 6 µm aufweisen.

### Beispiel 4

Zur Herstellung eines Suspensionskonzentrates werden

| |
|---|
| 100 g Polyoxyethylen-sorbitol-oleat |
| 113 g eines Gemisches aus Alkylarylsulphonat, Ethylhexanol und einem einfach verzweigten Alkoholethoxylat |
| 2 g Zitronensäure Wasserfrei |
| 0,5 g Polydimethylsiloxan |
| 2 g Butylhydroxytoluol |
| 10 g hydriertes Castoröl |
| 198 g Ethyl-hexyl-alkoxylat der Formel |

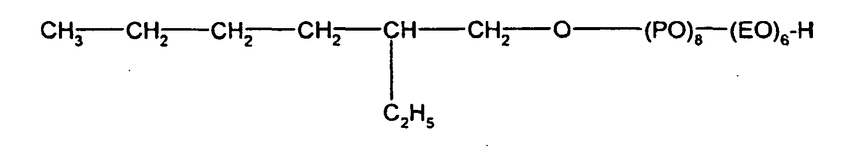

in welcher
- EO: für -CH₂-CH₂-O- steht,
- PO: für 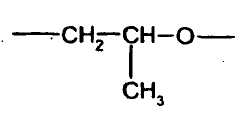
steht und
die Zahlen 8 und 6 Durchschnittswerte darstellen und
487,8 g Sonnenblumenöl
miteinander vermischt und bei Temperaturen bis maximal 60°C so lange gerührt, bis eine homogene Lösung entsteht. Zu dieser Lösung werden unter Rühren bei Raumtemperatur 76,5 g Imidacloprid und 10,2 g Deltamethrin gegeben. Nach beendeter Zugabe wird noch 10 Minuten bei Raumtemperatur nachgerührt. Die dabei entstehende homogene Suspension wird zunächst einer Grob- und dann einer Feinmahlung unterworfen, so dass eine Suspension erhalten wird, in der 90 % der Feststoffpartikel eine Teilchengröße unter 6 µm aufweisen.

### Beispiel 5

Zur Herstellung eines Suspensionskonzentrates werden

| |
|---|
| 100 g Polyoxyethylen-sorbitol-oleat |
| 113 g eines Gemisches aus Alkylarylsulphonat, Ethylhexanol und einem einfach verzweigten |
| Alkoholethoxylat |
| 2 g Zitronensäure Wasserfrei |
| 0,5 g Polydimethylsiloxan |
| 2 g Butylhydroxytoluol |
| 15 g hydriertes Castoröl |
| 198 g Ethyl-hexyl-alkoxylat der Formel |

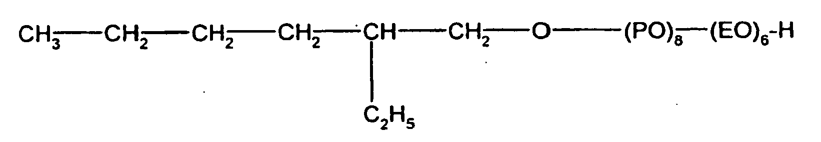

in welcher
- EO: für -CH₂-CH₂-O- steht,
- PO: für 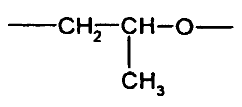
steht und
die Zahlen 8 und 6 Durchschnittswerte darstellen und
482,8 g Sonnenblumenöl
miteinander vermischt und bei Temperaturen bis maximal 60°C so lange gerührt, bis eine homogene Lösung entsteht. Zu dieser Lösung werden unter Rühren bei Raumtemperatur 76,5 g Imidacloprid und 10,2 g Deltamethrin gegeben. Nach beendeter Zugabe wird noch 10 Minuten bei Raumtemperatur nachgerührt. Die dabei entstehende homogene Suspension wird zunächst einer Grob- und dann einer Feinmahlung unterworfen, so dass eine Suspension erhalten wird, in der 90 % der Feststoffpartikel eine Teilchengröße unter 6 µm aufweisen.

### Beispiel 6

Zur Herstellung eines Suspensionskonzentrates werden

| |
|---|
| 100 g Polyoxyethylen-sorbitol-oleat |
| 30 g Polyalkoxylierter Alkohol |
| 5 g Naphthalinsulfonat |
| 2 g Zitronensäure Wasserfrei |
| 0,5 g Polydimethylsiloxan |
| 2 g Butylhydroxytoluol |
| 10 g hydriertes Castoröl |
| 200 g Ethyl-hexyl-alkoxylat der Formel |

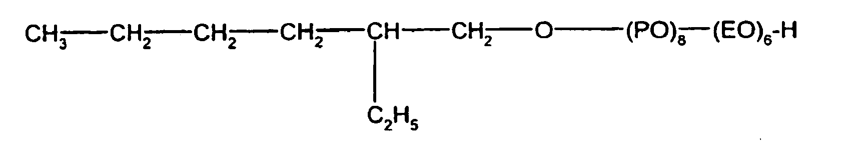

in welcher
- EO: für -CH₂-CH₂-O- steht,
- PO: für 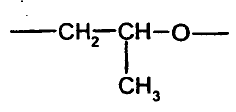
steht und
die Zahlen 8 und 6 Durchschnittswerte darstellen und
497,4 g Sonnenblumenöl
miteinander vermischt und bei Temperaturen bis maximal 60°C so lange gerührt, bis eine homogene Lösung entsteht. Zu dieser Lösung werden unter Rühren bei Raumtemperatur 153,1 g Spirotetramat gegeben. Nach beendeter Zugabe wird noch 10 Minuten bei Raumtemperatur nachgerührt. Die dabei entstehende homogene Suspension wird zunächst einer Grob- und dann einer Feinmahlung unterworfen, so dass eine Suspension erhalten wird, in der 90 % der Feststoffpartikel eine Teilchengröße unter 6 µm aufweisen.

### Beispiel 7

Zur Herstellung eines Suspensionskonzentrates werden

| |
|---|
| 100 g Polyoxyethylen-sorbitol-oleat |
| 30 g Polyalkoxylierter Alkohol |
| 5 g Naphthalinsulfonat |
| 2 g Zitronensäure Wasserfrei |
| 0,5 g Polydimethylsiloxan |
| 2 g Butylhydroxytoluol |
| 15 g hydriertes Castoröl |
| 200 g Ethyl-hexyl-alkoxylat der Formel |

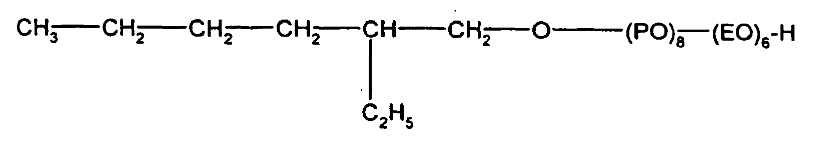

in welcher
- EO: für -CH₂-CH₂-O- steht,
- PO: für 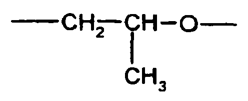
steht und
die Zahlen 8 und 6 Durchschnittswerte darstellen und
492,4 g Sonnenblumenöl
miteinander vermischt und bei Temperaturen bis maximal 60°C so lange gerührt, bis eine homogene Lösung entsteht. Zu dieser Lösung werden unter Rühren bei Raumtemperatur 153,1 g Spirotetramat gegeben. Nach beendeter Zugabe wird noch 10 Minuten bei Raumtemperatur nachgerührt. Die dabei entstehende homogene Suspension wird zunächst einer Grob- und dann einer Feinmahlung unterworfen, so dass eine Suspension erhalten wird, in der 90 % der Feststoffpartikel eine Teilchengröße unter 6 µm aufweisen

### Beispiel 8

Zur Herstellung eines Suspensionskonzentrates werden

| |
|---|
| 90 g Tridecylpolyoxyethylenesterphosphat |
| 10 g Naphthalinsulfonat |
| 1 g Polydimethylsiloxan |
| 15 g hydriertes Castoröl |
| 200 g ethoxylierte Guerbetalkohole der Formel (I-a-1) |

R-O-(-EO-)_{b}-R' (I-a-1)

in welcher
- R: für verzweigtes C₁₆-C₁₈-Alkyl steht,
- R': für n-Butyl, i-Butyl oder t-Butyl steht,
- EO: für -CH₂-CH₂-O- steht und
- b: für Zahlen 8 steht und die Zahl 8 ein Durchschnittswert darstellt und
474 g Mineralöl
miteinander vermischt und bei Temperaturen bis maximal 60°C so lange gerührt, bis eine homogene Lösung entsteht. Zu dieser Lösung werden unter Rühren bei Raumtemperatur 210 g Tebuconazole gegeben. Nach beendeter Zugabe wird noch 10 Minuten bei Raumtemperatur nachgerührt. Die dabei entstehende homogene Suspension wird zunächst einer Grob- und dann einer Feinmahlung unterworfen, so dass eine Suspension erhalten wird, in der 90 % der Feststoffpartikel eine Teilchengröße unter 6 µm aufweisen.

In den Beispielen sind folgende Produkte verwendet worden:

| | |
|---|---|
| Aerosil® R 812 S | Hydrophobes Silica |
| Arlatone® T(V) | Polyoxyethylen-sorbitol-oleat |
| Atlox® 3467 | Gemisch aus Alkylarylsulphonat, Ethylhexanol und einem einfach verzweigten Alkoholethoxylat |
| Atlox® 4894 | Polyalkoxylierter Alkohol |
| Bayol® 95 | Mineralöl (Paraffinöl) |
| Castorwax® MP-70 | Hydriertes Castoröl |
| Exasol® D 130 | Mineralöl |
| Morwet® D 425 | Naphthalinsulfonat |
| Rhodafac RS 610 | Tridecylpolyoxyethylenesterphosphat |
| Silfoam® 1132 | Polydimethylsiloxan |
| Vulkanox® BHT | Butylhydroxytoluol |

### Verwendungsbeispiel I

**Bestimmung der Regenfestigkeit nach Applikation wachshaltiger OD-Formulierungen im Vergleich zu einer OD-Formulierung ohne Wachs**

Eine gute Regenfestigkeit lässt sich prinzipiell durch eine schnelle Aufnahme der Wirkstoffes innerhalb weniger Stunden nach Applikation oder durch eine gute Belagsfestigkeit, welche wiederum von der Benetzbarkeit mit Regen und der Haftung auf der Pflanzenoberfläche abhängt, erreichen. Diese Eigenschaften wirken gleichzeitig und bestimmen, wie schnell Wirkstoff von der Blattoberfläche abgewaschen wird. In diesem Test wird die durch das Regenereignis abgewaschene Menge Wirkstoff in Abhängigkeit von der Zeitdauer zwischen Applikation des Mittels und Regenbeginn gemessen.

Für die Versuche wurde Baumwolle (Gossypium hirsutum Sorte Carmen), Weizen (Triticum aestivum L. Sorte Orestis) und Gerste verwendet. Die erfindungsgemäßen OD110 Formulierungen (Beispiel I, Beispiel II und Beispiel III) wurden mit der Handelsformulierung Proteus® OD110 (Bayer CropScience) verglichen. Diese Formulierung enthält die Wirkstoffe Deltamethrin und Thiacloprid. Als viel wasserlöslicherer Wirkstoff wird Thiacloprid allein (appliziert als wässrige Lösung) schnell vollständig von der Blattoberfläche abgewaschen. Der Einfluß der Formulierung auf die Regenfestigkeit wurde deshalb für Thiacloprid gemessen.

Von den Formulierungen wurden Spritzbrühen mit einer Wirkstoffkonzentration von 0.2 g/l Thiacloprid mit Leitungswasser angesetzt, was einer Aufwandmenge von 0,5 l Produkt in 250 Liter Wasser entspricht. Die Spritzbrühe enthielt als Tracer radioaktives Thiacloprid in einer Konzentration von 1500 dpm/µl. Je Formulierung wurden 5 mal 2 µl auf das vordere Blattdrittel von 3 Blättern appliziert (entspricht Zeitpunkt t = 0). Der gesamte Versuch fand in einer Edelstahl-Spritzkabine bei Raumtemperatur (20-22°C) statt, in welcher die Beregnung mit entsalztem Wasser aus einer Regendüse (Vollkegeldüse FC 468.528.16.42, Lechler) möglich ist. In der angegebenen Zeit nach Applikation wurde die Beregnung gestartet. Dies erfolgte durch ein Beregnungsprotokoll von 10 mm Regenmenge innerhalb einer Stunde in Form von 5 Beregnungen zu je 2 mm (nach t = 0, 15, 30, 45 und 60 min). Dies stellt ein "worst case scenario" bzgl. der Regenwirkung dar, weil durchgehend Wasser auf den Blättern ist und so das Anlösen und Abwaschen des Spritzbelages maximal ist.

Die Regenflüssigkeit wurde für jedes Blatt einzeln über das Abtropfen des Regenwassers über die Träufelspitze des Blattes in einem Becherglas quantitativ gesammelt und ein Aliquot genommen (= Abwaschfraktion). Die Aliquots der Abwaschflüssigkeit sowie 5 Kontrollen von je 2 µl der applizierten Menge wurden mit einem Szintillationszähler gemessen.

Aus den Messwerten wurde der prozentuale Anteil der abgewaschenen Fraktion und der regenfesten Fraktion des Spritzbelags bestimmt.

Für einige erfindungsgemäße Formulierungen wurde analog Confidor® Energy als Vergleichs-Formulierung eingesetzt. Diese Formulierung enthält Imidacloprid und Deltamethrin in Mengen von 75 bzw. 10 g/l als Wirkstoffe.

**Tabelle 1**

| Regenfestigkeit von Thiacloprid auf Baumwolle 2 Stunden nach Applikation | | |
|---|---|---|
| Formulierung | % Abgewaschen | % im Spritzbelag |
| Proteus® OD 110 | 92.2 | 7.8 |
| Beispiel I | 67.9 | 32.1 |
| Beispiel II | 82.9 | 17.1 |
| Beispiel III | 73.6 | 26.4 |

**Tabelle 2**

| Regenfestigkeit von Thiacloprid auf Baumwolle 0,5 Stunden (mit Wind trocken geblasen; nach 15 min trocken) nach Applikation | | |
|---|---|---|
| Formulierung | % Abgewaschen | % im Spritzbelag |
| Proteus® OD 110 | 86.0 | 14.0 |
| Beispiel I | 64.5 | 35.5 |
| Beispiel II | 55.0 | 45.0 |
| Beispiel III | 54.3 | 45.7 |

**Tabelle 3**

| Regenfestigkeit von Thiacloprid auf Weizen 2 Stunden nach Applikation | | |
|---|---|---|
| Formulierung | % Abgewaschen | % im Spritzbelag |
| Proteus® OD110 | 84.9 | 15.1 |
| Beispiel I | 83.7 | 16.3 |
| Beispiel II | 73.6 | 26.4 |

| Formulierung | % Abgewaschen | % im Spritzbelag |
|---|---|---|
| Beispiel III | 82.9 | 17.1 |

**Tabelle 4**

| Regenfestigkeit von Thiacloprid auf Gerste 0,5 Stunden (mit Wind trocken geblasen; nach 15 min trocken) nach Applikation | | |
|---|---|---|
| Formulierung | % Abgewaschen | % im Spritzbelag |
| Proteus® OD110 | 72.2 | 27.8 |
| Beispiel I | 68.0 | 32.0 |
| Beispiel II | 67.0 | 33.0 |
| Beispiel III | 69.4 | 31.6 |

**Tabelle 5**

| Regenfestigkeit von Imidacloprid auf Baumwolle 2 Stunden nach Applikation | | |
|---|---|---|
| Formulierung | % Abgewaschen | % im Spritzbelag |
| Confidor® Energy | 93.6 | 6.4 |
| Beispiel IV | 74.9 | 25 |
| Beispiel V | 80.3 | 19.7 |

### Testbeschreibung: Penetrationsförderer auf der Ebene der Kutikula

Additive, die als Penetrationsförderer auf der Ebene der Kutikula wirken, seien nachfolgend als Akzelerator-Additive bezeichnet (vgl. Schönherr und Baur, 1994, Pesticide Science 42, 185-208). Akzelerator-Additive zeichnen sich dadurch aus, dass sie aus der wässrigen Spritzbrühe und/oder aus dem Spritzbelag in die Kutikula eindringen und dadurch die Stoffbeweglichkeit (Mobilität) von Wirkstoffen in der Kutikula erhöhen können. Andere Additive wie Polyethylenglykol wirken dagegen nur im Spritzbelag (über die Flüssigphase) oder wirken nur als Netzmittel wie z.B. Natriumdodecylsulfat.

In diesem Test wird der Einfluß von Additiven auf die Penetrationseigenschaften anderer Substanzen auf der Ebene der Kutikula bestimmt. Dabei wird die Mobilität einer Testsubstanz in der Kutikula ohne und mit einem Additiv über eine Desorptionsmethode gemessen. Die Methode ist detailliert in der Literatur veröffentlicht (Baur et al., 1997, Pesticide Science, 51, 131-152) und lediglich die Prinzipien und Abweichungen werden nachfolgend beschrieben.

Als Testsubstanz mit der Funktion eines Tracers wurde hier eine radioaktiv markierte schwache organische Säure ausgewählt. Als Pflanzenmaterial wurden die enzymatisch isolierten Blattkutikeln der Oberseite von Birnenblättern von Freilandbäumen verwendet. Die Kutikeln wurden in speziell angefertigte Diffusionszellen aus Edelstahl eingebaut. Der Tracer wurde in einem Citratpuffer bei pH 3 in gelöstem Zustand auf die ursprünglich dem Blattinneren zugewandten Seite appliziert. Diese Innenseite nimmt die kleine radioaktive Menge des Tracers in der nicht dissoziierten Säureform leicht auf. Anschließend wurde diese Innenseite abgedeckt und bei 100% Luftfeuchte gehalten. Die normalerweise luftexponierte, morphologische Aussenseite der Blattkutikula wurde dann mit einem Puffer (pH7), der Rezeptorlösung in Kontakt gebracht und die Desorption gestartet. Die penetrierte Säureform der Testsubstanz wird durch den Rezeptor dissoziiert und die Desorption erfolgt einer Kinetik erster Ordnung. Die Desorptionskonstante ist proportional der Mobilität des Tracers in der Kutikula.

Nach mindestens 2 Zeiten zur Bestimmung dieser Konstanten wird nun die Desorption mit einem Puffer fortgesetzt, der zusätzlich das zu testende Additiv enthält. Je nach Eigenschaft des Additives kommt es nun zur Sorption des Additives in der Kutikula und je nach Wirksamkeit als Weichmacher für die Kutikula erhöht sich die Mobilität des Tracers in der Kutikula. Dies äußert sich in einer erhöhten Desorptionskonstante und das Verhältnis der Steigungen mit Additiv zu dem ohne Additiv beschreibt den Effekt des Additives auf der Ebene der Kutikula als Penetrationsförderer zu wirken. Der Vergleich des mittleren Effektes verschiedener Additive gibt damit deren Wirksamkeit als Weichmacher der Kutikula zu agieren wieder.

## Patentansprüche

1. Flüssig agrochemische Zusammensetzung umfassend
- mindestens einen bei Raumtemperatur festen agrochemische Wirkstoff und
- hydriertes Castoröl.
- mindestens einen Penetrationsförderer,
- mindestens ein Pflanzenöl oder Mineralöl,
- mindestens ein nicht-ionisches und/oder mindestens ein anionisches Dispergierhilfsmittel.

2. Zusammensetzung gemäß Anspruch 1 umfassend
- zwischen 1 und 40 Gew.-% mindestens eines bei Raumtemperatur festen agrochemischen Wirkstoffs,
- zwischen 0,5 und 3 Gew.-% hydriertes Castoröl,
- zwischen 5 und 50 Gew.-% mindestens eines Penetrationsförderers,
- zwischen 15 und 75 Gew.-% mindestens eines Pflanzenöls und/oder Mineralöl,
- zwischen 2,5 und 30 Gew.-% nicht-ionisches und/oder anionisches Dispergierhilfsmitteln.

3. Zusammensetzung gemäß einem oder mehreren der Ansprüche 1 bis 2, enthaltend als einen agrochemischen Wirkstoff Thiaoloprid.

4. Zusammensetzung gemäß einem oder mehreren der Ansprüche 1 bis 2, enthaltend als einen agrochemischen Wirkstoff Imidacloprid.

5. Zusammensetzung gemäß einem oder mehreren der Ansprüche 1 bis 2, enthaltend als einen agrochemischen Wirkstoff Spirotetramat.

6. Zusammensetzung gemäß einem oder mehreren der Ansprüche 1 bis 2, enthaltend als agrochemischen Wirkstoff mindestens ein Fungizid.

7. Zusammensetzung gemäß einem oder mehreren der Ansprüche 1 bis 2, enthaltend als agrochemischen Wirkstoff Tebuconazol.

8. Verfahren zur Verbesserung der Regenfestigkeit von flüssigen agrochemischen Zusammensetzungen, **dadurch gekennzeichnet, dass** einer konzentrierten Zusammensetzung oder einer anwendungsfertigen Zusammensetzung hydriertes Castoröl zugesetzt wird.

9. Verfahren gemäß Anspruch 8, **dadurch gekennzeichnet, dass** einer konzentrierten Zusammensetzung hydriertes Castoröl in einer Endkonzentration von 1 bis 2,5 Gew.-% zugesetzt wird.

10. Verwendung von hydriertem Castoröl zur Steigerung der Regenfestigkeit von flüssigen agrochemischen Zusammensetzungen.

## Claims

1. Liquid agrochemical composition, comprising
- at least one agrochemically active compound which is solid at room temperature
and
- hydrogenated castor oil,
- at least one penetrant,
- at least one vegetable oil or mineral oil,
- at least one nonionic and/or at least one anionic dispersant.

2. Composition according to Claim 1, comprising
- from 1 to 40% by weight of at least one agrochemically active compound which is solid at room temperature,
- from 0.5 to 3% by weight of hydrogenated castor oil,
- from 5 to 50% by weight of at least one penetrant,
- from 15 to 75% by weight of at least one vegetable oil and/or mineral oil,
- from 2.5 to 30% by weight of nonionic and/or anionic dispersants.

3. Composition according to one or more of Claims 1 to 2, comprising, as an agrochemically active compound, thiacloprid.

4. Composition according to one or more of Claims 1 to 2, comprising, as an agrochemically active compound, imidacloprid.

5. Composition according to one or more of Claims 1 to 2, comprising, as an agrochemically active compound, spirotetramate.

6. Composition according to one or more of Claims 1 to 2, comprising, as an agrochemically active compound, at least one fungicide.

7. Composition according to one or more of Claims 1 to 2, comprising, as an agrochemically active compound, tebuconazole.

8. Method for improving the rain resistance of liquid agrochemical compositions, **characterized in that** hydrogenated castor oil is added to a concentrated composition or a ready-to-use composition.

9. Method according to Claim 8, **characterized in that** hydrogenated castor oil in a final concentration of from 1 to 2.5% by weight is added to a concentrated composition.

10. Use of hydrogenated castor oil for increasing the rain resistance of liquid agrochemical compositions.

## Revendications

1. Composition agrochimique liquide comprenant
- au moins un agent actif agrochimique solide à température ambiante et
- de l'huile de ricin hydrogénée,
- au moins un promoteur de pénétration,
- au moins une huile végétale ou huile minérale,
- au moins un adjuvant de dispersion non ionique et/ou anionique.

2. Composition selon la revendication 1, comprenant
- entre 1 et 40 % en poids d'au moins un agent actif agrochimique solide à température ambiante,
- entre 0,5 et 3 % en poids d'huile de ricin hydrogénée,
- entre 5 et 50 % en poids d'au moins un promoteur de pénétration,
- entre 15 et 75 % en poids d'au moins une huile végétale et/ou huile minérale,
- entre 2,5 et 30 % en poids d'adjuvants de dispersion non ioniques et/ou anioniques.

3. Composition selon une ou plusieurs des revendications 1 à 2, contenant en tant qu'agent actif agrochimique du thiachlopride.

4. Composition selon une ou plusieurs des revendications 1 à 2, contenant en tant qu'agent actif agrochimique de l'imidaclopride.

5. Composition selon une ou plusieurs des revendications 1 à 2, contenant en tant qu'agent actif agrochimique du spirotétramate.

6. Composition selon une ou plusieurs des revendications 1 à 2, contenant en tant qu'agent actif agrochimique au moins un fongicide.

7. Composition selon une ou plusieurs des revendications 1 à 2, contenant en tant qu'agent actif agrochimique du tébuconazole.

8. Procédé d'amélioration de la résistance à la pluie de compositions agrochimiques liquides, **caractérisé en ce qu'**une composition concentrée ou une composition prête à l'emploi d'huile de ricin hydrogénée est ajoutée.

9. Procédé selon la revendication 8, **caractérisé en ce qu'**une composition concentrée d'huile de ricin hydrogénée est ajoutée à une concentration finale de 1 à 2,5 % en poids.

10. Utilisation d'huile de ricin hydrogénée pour accroître la résistance à la pluie de compositions agrochimiques liquides.
